(19)

**Europäisches Patentamt**
**European Patent Office**
**Office européen des brevets**

(11) **EP 1 473 894 B1**

(12) **EUROPEAN PATENT SPECIFICATION**

(45) Date of publication and mention
of the grant of the patent:
**26.12.2007 Bulletin 2007/52**

(51) Int Cl.:
*H04L 12/56* ^(2006.01)

(21) Application number: **04010287.3**

(22) Date of filing: **30.04.2004**

(54) **Traffic distribution control apparatus and method**

Gerät und Verfahren zur Verkehrsverteilungssteuerung

Appareil et procédé pour contrôle de distribution du trafic

(84) Designated Contracting States:
**DE GB**

(30) Priority: **01.05.2003 JP 2003126602**

(43) Date of publication of application:
**03.11.2004 Bulletin 2004/45**

(73) Proprietor: **NTT DoCoMo, Inc.**
**Tokyo 100-6150 (JP)**

(72) Inventor: **Okura, Akihito,**
**NTT DoCoMo, Inc.**
**Chiyoda-ku,**
**Tokyo 100-6150 (JP)**

(74) Representative: **Sparing Röhl Henseler**
**Patentanwälte**
**European Patent Attorneys**
**Rethelstrasse 123**
**40237 Düsseldorf (DE)**

(56) References cited:
**US-A- 6 141 319       US-A1- 2002 067 693**
**US-A1- 2002 131 424     US-A1- 2002 172 149**
**US-A1- 2003 009 582     US-A1- 2003 016 624**

**Description**

The invention relates to a traffic distribution control apparatus and a traffic distribution control method, and more specifically to a traffic distribution control apparatus and a traffic distribution control method for determining whether or not an existing path realized by a router configuring the network can support requested traffic, and controlling the traffic to be distributed in the network by adding only a necessary path and assigning the optimal traffic to each path if it is determined that the existing path cannot support the requested traffic.

A network such as the Internet, etc. constantly has the possibility of a flow of traffic exceeding the band of the current path. In such a network, it is a very important problem to determine whether or not the current path is sufficient for the traffic, and how the necessary path is to be increased it tne current path is not sufficient.

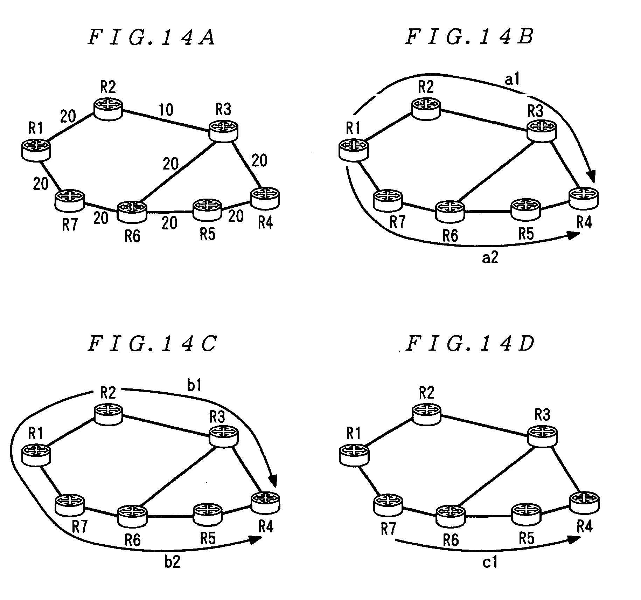

The problem of determining whether or not the current path is sufficient for the traffic is standardized as a problem of linear programming. This problem is described below by referring to Figures 14A to 14D. Figures 14A to 14D show a network (hereinafter referred to as an IP network) configured by a plurality of routers. In the IP network shown in Figures 14A to 14D, routers R1, R2, R3, R4, R5, F6, and R7 are sequentially connected. The router R7 is connected to the router R1, thereby forming a circular structure. The router R3 is directly connected to the router R6.

The numbers "10" and "20" shown in Figure 14A indicate the bands (Mbps) of links. That is, in this example, the band of the link between the routers R2 and R3 is 10 Mbps, and the band of the link between other routers is 20 Mbps. The resource consumption in all links is assumed to be "1".

The traffic is 10 Mbps in each of the path from the router R1 to the router R4, the path from the router R2 to the router R4, and the path from the router R7 to the router R4.

As shown in Figure 14B, there are two paths $a_1$ and $a_2$ between the routers R1 and R4. As shown in Figure 14C, there are two paths $b_1$ and $b_2$ between the routers R2 and R4. As shown in Figure 14D, there are the path $C_1$ between the routers R7 and R4. It is assumed that the flow rate in each path is variable, and is collectively referred to as a path group variable.

The conditional expression of the linear programming method is represented as follows. That is, the objective function is represented by

$$f = 3a_1 + 4a_2 + 2b_1 + 5b_2 + 3c_1 \ ... \ (1)$$

In tne linear programming method, the objective function is minimized. The restrictive expression of a traffic amount is represented by:

$$a_1 + a_2 = 10 \ ... \ (2)$$

$$b_1 + b_2 = 10 \ ... \ (3)$$

$$c_1 = 10 \ ... \ (4)$$

The restrictive expression of a link band is represented by:

$$a_1 + b_1 \leq 10 \ ... \ (5)$$

$$a_2 + b_2 + c_1 \leq 20 \ ... \ (6)$$

Under the above-mentioned conditions, the following expression can be obtained.

$$(a_1, a_2, b_1, b_2, c_1) = (0, 10, 10, 0, 10) \ldots (7)$$

As described above, an appropriate objective function is set with a path set as a variable, and the restrictive condition (not exceeding a link band, etc.) for a path and the restrictive condition (... Mbps for a path, etc.) for a traffic amount are set. With the restrictions, an inequality is converted into an equation (standard system) using a non-negative slack variable. A slack variable refers to a variable indicating the room for the condition for an equation.

The method for solving a problem of the linear programming using the standard system can be a well-known simplex method. In the simplex method, the geometric convex polyhedron enclosed by planes (hyperplanes) under restrictive conditions or a simplex is set as a feasible region, and a point to obtain the maximum (or minimum) objective function in the feasible region is detected.

Since an objective function is linear, it has a tilt. If the objective function is increased (or decreased) in the direction of the tilt, the vertex of a feasible region can be reached. The vertex indicates a vector to obtain the maximum (or minimum) objective function in a feasible region. The vector is referred to as the optimal feasible vector.

The determination of a solution of a simplex can be made using the feasible region. When no feasible region exists, there is no optimal feasible vector, or no solution. That is, since the current path has no variable satisfying the specified condition, the current path is not sufficient. On the other hand, the optimal feasible vector obtained when there is a feasible. region indicates the most preferable traffic distribution in accordance with the objective function.

The simplex method is described in, for example, Non-patent Document 1: Masao Iri and Takashi Furubayashi "Network Theory" in OR Library 12, published by Japanese Scientific Technology Association, 1976.

As described above, in the method of using the simplex method as a problem of linear programming, the presence/absence of a solution is determined, and the optimal solution is returned depending on the objective function when there is a solution. Thus, the method can be recognized as a very effective method.

However, in the above-mentioned conventional technology, the simplex method is used for an advancely prepared path group. For example, the simplex method is applied to the paths $a_1$, $a_2$, $b_1$, $b_2$, and $c_1$ shown in Figures 14A to 14D.

Therefore, although less paths can sufficiently work, calculations are performed on all paths, and the amount of calculations can be redundant. Furthermore, the advancely prepared paths in a prepared path group share a bottleneck link, and there can be the case in which the band is not sufficient.

In this case, there is the demerit that the above-mentioned conventional method cannot sufficiently work.

The document US 2002/131424 discloses a management center comprising information on a risk sharing resource group in a network having plurality of nodes. A node control unit refers to a topology table to calculate the shortest route (primary path) from a node to another node using a constrained shortest path first (CSPF) algoritm. In a next calculation, alternate path routes are determined. In case of an overlap between primary path and alternate path, the management node sends a rejection method to the node controlling unit.

The document US 2002/172149 discloses a method and device for protection path setup that can automatically set up protection path capable of guaranteeing QoS and sharing the bandwidth at an intermediate node along a working path and regardless of the network size.

It is the object of the invention to solve the above-mentioned problems with the conventional technology, and to provide a traffic distribution control apparatus and a traffic distribution control method capable of obtaining the most preferable traffic distribution even when the amount of calculations is redundant and when there is no sufficient band prepared for the path group sharing a bottleneck link.

The traffic distribution control apparatus of the invention controls traffic in a network to be distributed by determining whether or not an existing path realized by a router configuring the network can support requested traffic, and includes:

determination means for determining whether or not the existing path can support the traffic by applying a simplex method to a problem of a linear programming formed by an objective function and a restrictive condition including traffic among routers configuring a network and information about a path in the network; and

bypass search means for searching for a bypass other than the existing path when the determination means determines that the existing path cannot support the traffic, wherein

the determination means further makes a determination by adding a bypass searched for by the bypass search means. With the above-mentioned configuration, it can be determined whether or not the traffic can be accommodated by the current path, and only a necessary path can be added so that the traffic can be optimally distributed when the traffic cannot be accommodated.

Further embodiments may be gathered from the following description and the claims.

In the traffic distribution control apparatus of the invention, the determination means finds a bottleneck link causing a factor disabling the support of the requested traffic by applying the simplex method to an auxiliary objective function determined by the restrictive condition; and

the bypass search means searches for the bypass for bypassing the bottleneck link. With the above-mentioned configuration, the bottleneck link can be found unlike the conventional technology, and a bypass is added and the traffic can be optimally distributed.

In the traffic distribution control apparatus of the invention, the bypass search means searches for the bypass using an algorithm of searching for the shortest path based on the link cost among the routers. By applying the algorithm described later, the shortest path can be easily searched for.

In the traffic distribution control apparatus of the invention, the determination means can perform the determination at predetermined intervals. Thus, a path can be periodically set.

In the traffic distribution control apparatus of the invention, the determination means performs the determination based on the monitor result of each traffic state of the router configuring the network. Thus, when traffic exceeding a predetermined amount enters at a burst, the setting of the path can be updated.

The traffic distribution control apparatus of the invention further includes traffic determination means for determining traffic for minimizing the cost of the network based on a determination result of the determination means. The traffic can be optimally distributed with only a necessary path added by determining the traffic for minimizing the consumption of the ressources of the network minimizing the delay, and setting the smallest number of hops.

In the traffic distribution control apparatus of the invention, when the traffic determination means makes a determination, and when the traffic includes a plurality of classes indicating priorities, the traffic depends on the classes. With the configuration, although there are a plurality of classes in requested traffic, the optimal path can be set depending on the priority, thereby optimally distributing the traffic.

The traffic distribution control method of the invention controls traffic in a network to be distributed by determining whether or not an existing path realized by a router configuring the network can support requested traffic, and includes:

a determining step of determining whether or not the existing path can support the traffic by applying a simplex method to a problem of a linear programming formed by an objective function and a restrictive condition including traffic among routers configuring a network and information about a path in the network; wherein

in the determining step a bottleneck link is specified, when an auxiliary objective function does not satisfy a predetermined value, and applying a simplex method to a problem of a linear programming formed by the objective function, the auxiliary function and a restrictive function;

a bypass searching step of searching for a bypass other than the existing path when the determining step determines that the existing path cannot support the traffic, wherein

a further determination is made in the determining step by adding a bypass searched for in the bypass searching step. In this method, it can be determined whether or not the traffic can be accommodated in the current path, and only a necessary path can be added when it cannot be accommodated, thereby optimally distributing the traffic.

The traffic distribution control method of the invention further includes a traffic determining step of determining traffic for minimizing consumption of resources of the network based on the determination result of the determining step. With the configuration, the traffic can be optimally distributed after adding an only necessary path.

As described above, according to the invention, it is determined in the simplex method whether or not the current path is sufficient for the traffic, and when it is not sufficient, a bottleneck link is found using the characteristics of the simplex method and a path for bypassing the bottleneck link can be newly added to a path group so that only a path for a necessary point can be dynamically added. Furthermore, an objective function can be set such that the network cost can be minimized, thereby optimally distributing the traffic for the path obtained in the determination.

The invention is different from the conventional technology in that when there is no optimal solution, a bottleneck link causing requested traffic not to be supported can be detected and a bypass can be added. In the conventional technology, when there is no optimal solution, the process immediately terminates without finding a bottleneck or adding a bypass.

A bottleneck can be found as follows. That is, a provisional feasible vector is used when the auxiliary objective function (described later) obtained based on the restrictive condition is not set to 0, but stops. The provisional vector indicates the state in which the maximum traffic flows through the current path. Therefore, a bottleneck link can be detected by comparing the value with the value of the link band.

A path which bypasses the bottleneck link can be obtained by various algorithms described below.

The invention will be explained below in detail in connection with the attached drawings.

Figure 1 shows an example of the configuration of the entire network including a traffic distribution control apparatus according to the invention.

Figure 2 is a block diagram showing the configuration of the traffic distribution control apparatus shown in Figure 1.

Figure 3 is a flowchart showing the operation of the traffic distribution control apparatus shown in Figure 1.

Figure 4 is a flowchart showing the operation of the traffic distribution control apparatus shown in Figure 1.

Figures 5A and 5B show the outline of an example of applying a simplex method.

Figures 6A and 6B show the outline of another example of applying a simplex method.

Figures 7A to 7F show examples of the procedure of obtaining a bypass by applying Dijkstra.

Figures 8A to 8C are explanatory views showing the case in which an objective function is set such that the consumption of network resources can be minimized.

Figures 9A to 9G show the first embodiment of the invention.

Figures 10A to 10G show the second embodiment of the invention.

Figures 11A to 11G show the third embodiment of the invention.

Figures 12A to 12C show the third embodiment of the invention.

Figures 13A to 13D are explanatory views showing the case in which an objective function is set such that a delay can be minimized or based on the number of hops.

Figures 14A and 14D are explanatory views showing the conventional method of determining whether or not the current path is sufficient for the traffic.

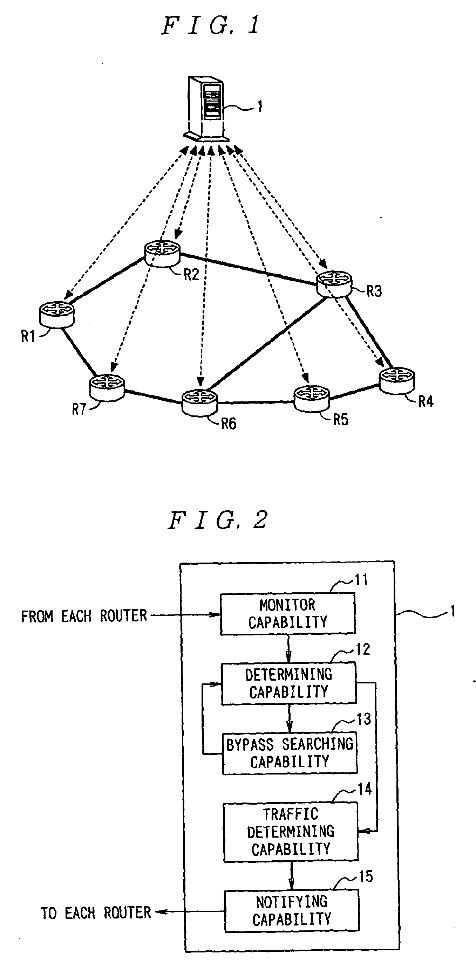

Figure 1 shows the entire configuration of the network including the traffic distribution control apparatus according to the invention. An IP network forms a circular structure with the routers R1 to R7 sequentially connected. The router R3 is directly connected to the router R6.

The state of the traffic with the routers R1 to R7 is monitored by a traffic distribution control apparatus 1. The configuration of the traffic distribution control apparatus 1 is explained below by referring to Figure 2.

The traffic distribution control apparatus 1 shown in Figure 2 includes: a monitor capability 11 of receiving and monitoring the state of traffic of the routers R1 to R7 forming an IP network; a determining capability 12 of determining whether or not the existing path can support requested traffic by applying the simplex method; a bypass searching capability 13 of searching and obtaining a bypass other than an existing path when it is determined that the existing path cannot support the traffic; a traffic determining capability 14 of determining the traffic such that the network cost including the network resource consumption, delay, the number of hops, etc. can be minimized based on the determination result by the determining capability 12; and a notifying capability 15 of issuing a notification of the information about setting the traffic determined by the traffic determining capability 14 in each of the routers R1 to R7.

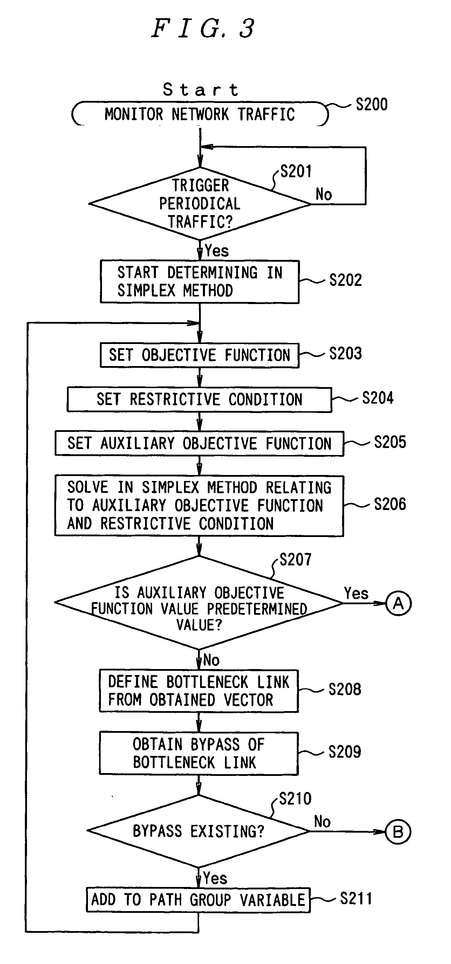

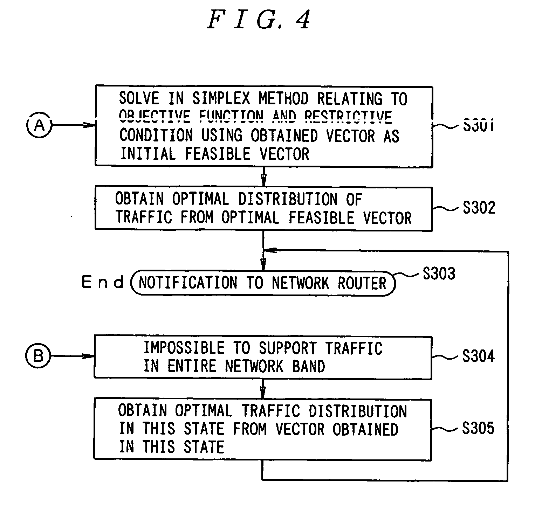

The operation of the traffic distribution control apparatus 1 with the above-mentioned configuration is described below by referring to Figures 3 and 4. Figures 3 and 4 are flowcharts showing the operation of the traffic distribution control apparatus 1.

The traffic distribution control apparatus 1. monitors the state of the traffic through the router in the network (step S200). The traffic distribution control apparatus 1 determines whether or not the current path can support the traffic. The determination can be periodically (that is, at predetermined intervals) performed, or can be started when traffic exceeding a predetermined amount flows at a burst. That is, when a predetermined period passes, or when traffic flows at a burst, it is the trigger of starting the determination (step S201). In response to the trigger, the traffic distribution control apparatus 1 starts the determination as to whether or not the current path can support the traffic (step S201 → S202).

In the determination, an objective function in the simplex method is first set (step S203). For example, a function for minimizing the network resource consumption (that is, cost) is set as an objective function in the simplex method.

Then, the restrictive condition is set (step S204). For example, the restrictions on the link band, and the restrictions on the flowing traffic are set as the restrictive conditions in the simplex method. Furthermore, an auxiliary objective function for obtaining an initial feasible vector of a simplex is also set (step S205).

When the above-mentioned settings are completed, the problems of the simplex method is solved relating to the auxiliary objective function and the restrictive condition (step S206).

When the auxiliary objective function satisfies a predetermined constraint, control is passed to Figure 4, and the obtained vector is used as an initial feasible vector in solving the simplex method on the objective function and the restrictive condition (step S207 → S301). Although there are a plurality of classes (described later) on the quality from the optimal feasible vector indicating the way of traffic distribution, the optimal traffic distribution can be obtained corresponding to each of the classes (step S302). The optimal feasible vector is announced to the network router (step S303), and the process terminates.

Back in Figure 3, in step S207, when the auxiliary objective function does not satisfies a predetermined constraint, a bottleneck link is specified from the vector in the state (step S207 → S208). Then the bypass is obtained for the path which uses the bottleneck link (step S209).

When there is no bypass, it follows that the traffic cannot be supported using the band in the entire network as shown back in Figure 4 (step S210 → S304). From the vector in this state, the optimal traffic distribution in this state can be obtained (step S305). In this case, the network router is notified that there is no solution (step S303), thereby terminating the process.

Back in Figure 3, when there is a bypass in step S210, it is added as a path group variable (step S210 → S211). Then the objective function, the restrictive condition, and the auxiliary objective function are set again (steps S203, S204, and S205), and the problem is solved in the simplex method (step S206). The above-mentioned process is recursively repeated.

(Traffic Distribution Control Method)

In the traffic distribution control apparatus performing the above-mentioned operations, the following traffic distribution control method is realized. That is, the traffic distribution control method controls traffic in a network to be distributed by determining whether or not an existing path realized by a router configuring the network can support requested traffic, and includes: a determining step of determining whether or not the existing path can support the traffic by applying a simplex method to a problem of a linear programming formed by an objective function and a restrictive condition including traffic among routers configuring a network and information about a path in the network (corresponding to steps S203 to S206); and a bypass searching step of searching for a bypass other than the existing path when the determining step determines that the existing path cannot support the traffic (corresponding to steps S207 to S209), wherein a further determination is made in the determining step by adding a bypass searched for in the bypass searching step (corresponding to steps S210, S211, ...). Thus, the traffic distribution control method is realized. Additionally, further included is a traffic determining step (corresponding to steps S301 and S302, and steps S304 and S305) of determining traffic for minimizing consumption of resources of the network based on the determination result of the determining step. With the above-mentioned method, it can be determined whether of not the traffic can be accommodated through the current path, and when it cannot be accommodated, only a necessary path can be added, thereby optimally distributing the traffic.

(Process in each router)

According to the information notified by the traffic determining capability 14, each of the routers R1 to R7 updates the path information. That is, the path information about the path in the network is stored in each of the routers R1 to R7 shown in Figure 1, and each of the roulers R1 to R7 adds path information based on the information transmitted by the traffic determining capability 14 when a path is added in the above-mentioned process. When the class described later exists on the traffic, each of the routers R1 to R7 associates each class with path information according to the information transmitted by the traffic determining capability 14.

(Simplex Method)

Described below are the simplex method and the principle of finding a bottleneck link from the characteristics of the simplex method.

A simplex method refers to a method for obtaining the optimal feasible vector which maximizes (or minimizes) the objective function in a feasible region. First, a practical process of obtaining a solution is described below.

In the simplex method, it is known that a solution exists at the vertex of the feasible region. In the vertexes of a feasible region, the vertex maximizing (or minimizing) the objective function is referred to as an optimal feasible vector, and the other vertexes are referred to as feasible vectors.

The simplex method starts with obtaining any feasible vector. If a feasible vector is obtained, the optimal feasible vector is reached by repeating the movement from the obtained feasible vector to other feasible vectors based on the tilt of the objective function. On the other hand, if no feasible vector exists, that is, there is no feasible region, then no solution exists.

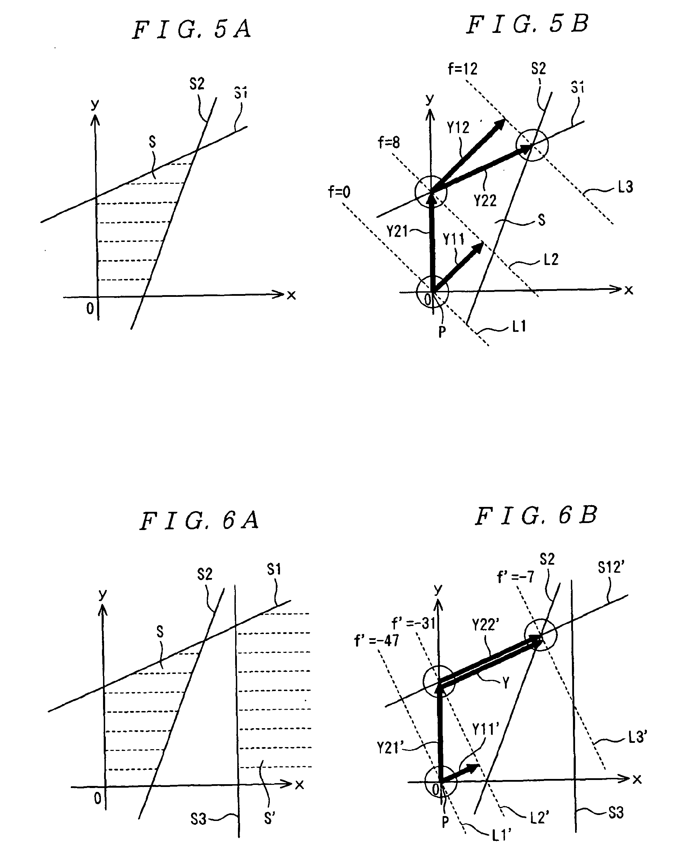

In Figure 5A, the maximization of the objective function $f = x + y$ is intended. The restrictive condition is

$$x, y \geq 0 \dots (8)$$

$$-2x + 4y \leq 32 \dots (9)$$

$$7x - 2y \leq 8 \ ... \ (10)$$

The area completely satisfying the restrictive condition is the simplex (feasible region). It is the area S enclosed by the x axis and the y axis, and the straight line S1 and the straight line S2 shown in Figure 5A. In Figure 5A, the straight line S1 is a straight line by the expression (9), and the straight line S2 is a straight line by the expression (10).

The meaning of the arithmetic in the simplex method is reaching the optimal feasible vector by processing along the boundary from vertex to vertex in the increase direction of an objective function. The arithmetic is explained below by referring to Figure 5B. As shown in Figure 5B, the arithmetic starts with the initial feasible vector (x, y) = (0, 0). The arrows Y11 and Y12 in Figure 5B indicate the increase direction of the objective function. Figure 5B shows the straight line L1 (f = 0) passing the origin P, the straight line L2 (f = 8) passing the next vertex of the area S, and the straight line L3 (f = 12) passing the intersection between the straight line S1 and the straight line S2.

In Figure 5B, move along the boundary of the area S in the increase direction of the objective function. At the boundary, after moving in the direction of the arrow Y21, control is passed in the direction of the arrow Y22. As a result, the optimal feasible vector (x, y) = (4, 10) is obtained.

To obtain the initial feasible vector, an another objective function other than the target objective function is defined (hereinafter referred to as an auxiliary objective function), and a problem is solved in the simplex method relating to the auxiliary objective function. When the auxiliary objective function reaches a value (for example, 0), the value of each variable becomes an initial feasible vector.

In figures 6A and 6B, when the objective function i - x + y is maximized, the restrictive conditions are

$$x, y \geq 0 \ ... \ (8)$$

$$-2x + 4y \leq 32 \ ... \ (9)$$

$$7x - 2y \leq 8 \ ... \ (10)$$

$$x \geq 7 \ ... \ (11)$$

Figure 6A shows, in addition to the same area S as in the case shown in Figures 5A and 5B, the area S'. When the expressions (9) to (11) are transformed into equations using non-negative slack parameters $\alpha$, $\beta$ and y, the following equations hold.

$$-2x + 4y + \alpha = 32 \ ... \ (12)$$

$$7x - 2y + \beta = 8 \ ... \ (13)$$

$$x - \gamma = 7 \ ... \ (14)$$

Furthermore, using artificial variables z1, z2, and z3 and transposition, the expressions (12) to (14) are transformed as follows.

$$z1 = 32 + 2x - 4y - \alpha \ ... \ (15)$$

$$z2 = 8 - 7x + 2y - \beta \ ... \ (16)$$

$$z3 = 7 - x + \gamma \ldots (17)$$

where

$$f' = - z1 - z2 - z3 = -47 + 5x + 2y - \alpha - \beta + \gamma \ldots (18)$$

The expression (18) is an auxiliary objective function.

The auxiliary, objective function is obtained by transforming the restrictive condition other than the non-negative condition such as the expression (8) into equations using a slack variable, setting an artificial variable for each restrictive condition, multiplying the artificial variable by - (minus), and a sum is obtained.

Relating to the auxiliary objective function, a solution is obtained as shown in Figure 6B. The arrows Y11' and Y12', shown in Figure 6B, indicate the increase direction of the objective function. Figure 6B shows the straight line L1' (f' = -47) passing the origin P, the straight line L2' (f' = -31) passing the next vertex of the area S', and the straight line L3' (f' = -7) passing the intersection between the straight line S1 and the straight line S2.

The expressions (15) to (17) do not indicate the same problem as the expression (12) to (14) and expressions (9) to (11). Their problems are the same when z1, z2, and z3 are 0. Unless z1, z2, and z3 are all zero, the restrictive conditions are not satisfied. Therefore, a feasible region is provided so that all of z1, z2, and z3 are necessarily 0 when there is a feasible vector. Therefore, an auxiliary objective function is to be 0. That is, when there are values set for z1, z2, and z3 (not 0), the restrictive condition is changed.

To solve a problem in the simplex method relating to an auxiliary objective function means to perform the following process. That is, when an auxiliary objective function encounters a hyperplane, the auxiliary objective function is projected on the hyperplane, and the process is performed along the tilt on the hyperplane. If it encounters the hyperplane under a new restrictive condition, projection is performed again, and the process is performed along the tilt. The above-mentioned processes are repeated.

In Figure 6B, when control is passed in the increase direction of the objective function along the boundary of the area S, it is passed in the direction of the arrow Y21' at the boundary, and then in the direction of the arrow Y22'.

if control reaches a vertex, and the auxiliary objective function is not 0 although no area exists ahead, then there is no solution. In this case, there is no feasible vector.

In short, if the auxiliary objective function is a predetermined value of 0, then there is an initial feasible vector. If the auxiliary objective function is not a predetermined 0, then there is no initial feasible vector. In the example according to the present embodiment, the auxiliary objective function is not the predetermined value of 0, and there is no area in the increase direction of the objective function. Therefore, there is no solution.

That is, if a character is reached, and if the auxiliary objective function is not 0 although there is no area ahead, then it is determined that there is no solution. The vertex reached immediately before no solution is determined satisfies the restrictive condition (hyperplane) before the reached point. The value of each variable obtained at this time is defined as a provisional feasible vector.

The status indicates that the traffic in the band of the link flows as much as possible through each path, but there is still the traffic to flow. That is, since the restrictive condition for the band of a link and the restrictive condition relating to the traffic amount to flow are loose to each other, there is no feasible region. Therefore, it is possible to specify how much traffic flows from the provisional feasible vector to each path, and which link becomes a bottleneck as a result.

As shown in Figure 6A, since the area S and the area S' are loose to each other, there is no feasible region. The presence/absence of a feasible region is clear when a restrictive condition is shown in a two-dimensional array as shown in Figure 6A. However, when a restrictive condition is displayed in a higher dimensional array, the determination of the presence/absence of it is difficult.

The status shown in Figure 6B shows the process performed along some restrictive conditions until it reaches a provisional feasible vector, but there is no more area ahead. Such a status in a network means that traffic flows as much as possible in the link band through each path, but there is still traffic to flow. Therefore, if the value of a provisional feasible vector is set to a value of a path group variable, then a bottleneck link can be determined.

Therefore, when recalculation of a path is performed by a predetermined algorithm such that the bottleneck can be avoided, the optimal bypass is obtained only for the path which used the bottleneck link, and the other paths are not affected. The recalculation of the path can be performed using, for example, a Dijkstra algorithm, an expression with powers, a Warshall-Floyd algorithm. That is, a bypass is searched for by an algorithm for a shortest path based on the link cost between routers. (Dijkstra)

Dijkstra is a method for generating a shortest path tree through which the cost can be lowest between nodes in a network. The path through which the total link cost between nodes can be lowest is recorded in the shortest path tree. If the bottleneck link cost is increased, and recalculation is performed using the Dijkstra algorithm, then a costly link is not selected as the shortest path, thereby successfully obtaining a bypass.

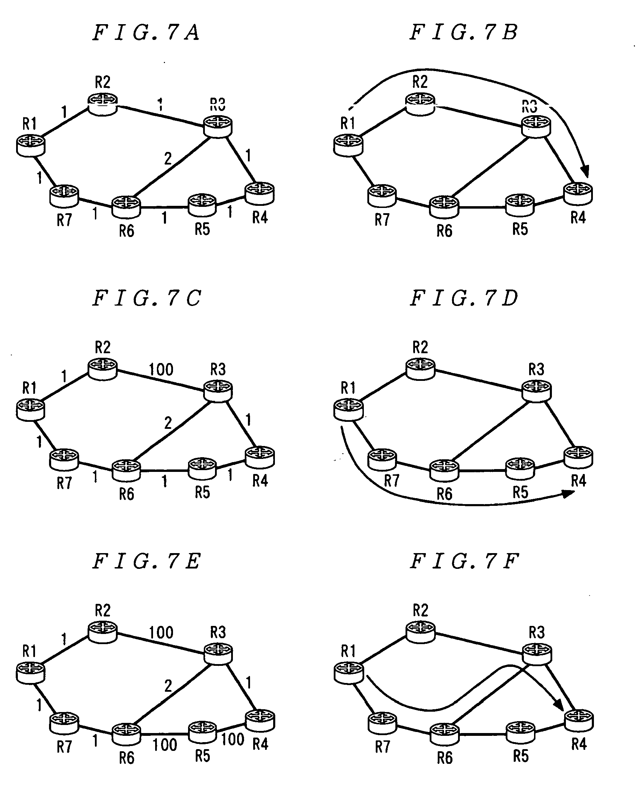

An example of the procedure of obtaining a bypass using Dijkstra is explained below by referring to Figures 7A to 7F. In Figure 7A, the number between the routers indicates a link cost. That is, the link cost is 2 only between the routers R3 and R6, and 1 between other routers.

The shortest path between the routers R1 and R4 is searched for by Dijkstra. The shortest path is established through the routers 2 and 3 as shown in Figure 7B. The link cost of the path is 3.

If no traffic flows only using the shortest path, then a bottleneck link is found and the link cost is raised. That is, as shown in Figure 7C, the link cost between the routers R2 and R3 is raised. In this example, the link cost between the routers R2 and R3 is raised up to 100. Thus, with the link cost raised, a bypass is obtained by Dijkstra. The bypass is a path through the routers R7, R6, and R5 sequentially as shown in Figure 7D. The link cost of the path is 4.

When no traffic flows in these two paths, a bottleneck link is found again, and its link cost is raised. That is, as shown in Figure 7E, the link costs between the routers R6 and R5 and between the routers R5 and R4 are raised. In this example, link costs between the routers R6 and R5 and between the routers R5 and R4 are raised to 100. Thus, with the link cost raised, a further bypass is obtained by Dijkstra. The bypass is a path established through the routers R7, R6, and R3 sequentially as shown in Figure 7F. The link cost of the path is 5.

As described above, when a bottleneck link is found, a bypass is obtained by Dijkstra. With the obtained bypass added, the simplex method is further applied.

(Warshall-Floyd)

Warshall-Floyd refers to a solution for determining the shortest path in the following procedure where "n" indicates the number of location, "$L_1$" indicates the name of the i-th location, and "$d_{1j}$" indicates the distance between the location i and the location j. The "distance $d_{1j}$" is not limited to a physical distance, but can be any distance in the concept of cost, time, etc. Furthermore, when the location i and the location j are not connected, the distance $d_{ij} = \infty$.

procedure 1: $d_{ij}(0) = d_{ij}$, $p_{ij} = i$ (i, j = 1, 2, 3, ... n), and m=1
procedure 2: (a) $d_{ij}(m) = \min(d_{ij}(m-1), d_{im}(m-1) + d_{mj}(m-1)$
For (i, j) in (b) $d_{ij}(m) < d_{ij}(m-1)$, $p_{ij} = p_{mj}$.
procedure 3: The process terminates when m = n. When m < n, the value of m is incremented by 1, and control is returned to the procedure 2. At this time $d_{ij}(m)$ indicates the path from $L_i$ to $L_j$, and it is the shortest distance in the path allowing only $L_1$, $L_2$, ... $L_m$ as an intermediate passing point. When control is passed to m = n, $d_{ij}(n)$ indicates the shortest path from $L_i$ to $L_j$, and $p_{ij}$ indicates the number of the location immediately before $L_j$ in the shortest path from $L_i$ to $L_j$.

A path obtained as a bypass by the algorithms of the above-mentioned Dijkstra and Warshall-Floyd and newly added is a necessary minimal link. Therefore, the increase of the simplex variables can be avoided. By adding the new path, the band of the entire path is expanded. Therefore, if a path is repeatedly added until the restrictive condition relating to the band and the restrictive condition on the traffic amount can afford a feasible region, then the optimal paths can be added with the smallest possible number of variables.

If the auxiliary objective function is 0, the vector obtained at the time is defined as the initial feasible vector, and the linear programming problem comprising an objective function and restrictive conditions is solved by the simplex method, thereby obtaining the optimal feasible vector.

Described below is the method of distributing traffic such that the network cost can be minimized with the above-mentioned path group variable.

As described above, the simplex method uses maximization and minimization on an objective function. That is, if the consumption of the network resources is defined as the cost of a network, and the objective function is set such that the consumption of network resources can be minimized, then it is determined whether or not there is a solution, and when there is a solution, the way of the optimal flow of traffic can be obtained as the optimal feasible vector.

If it is assumed that network resources of each link consumed per traffic is determined, the network resources consumed by each path is a total of the network resources consumed by the links contained in the path because each path is a set of links.

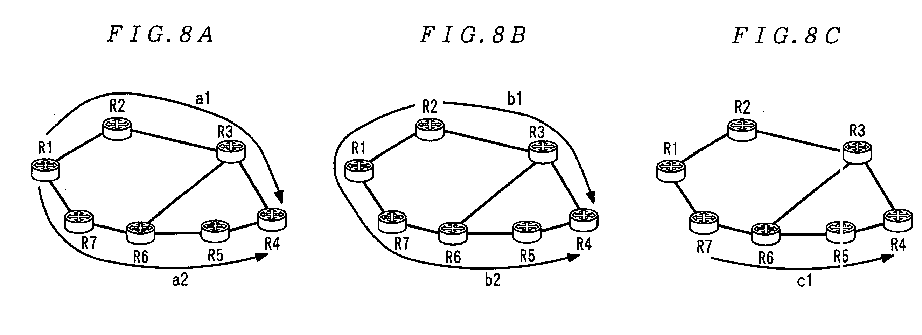

Assume that an objective function is set such that the consumption of the network resources can be minimized in the network shown in Figures 8A to 8C. In Figures 8A to 8C, the consumption of the resources in all links is assumed to be 1.

First, the consumption of the resources in the link L is $C_L$. Then, the cost $C_{Pi}$ of the path Pi is a total of the link costs used, and the following expression holds.

$$C_{Pi} = \sum_{L \in Pi} C_L \quad \ldots (16)$$

where $x_i$ indicates the traffic flowing through the path, and the objective function f is expressed as follows.

$$f = \sum_{i \leq n}^{i=1} C_{Pi} X_1 \quad \ldots (17)$$

that is, the $x_i$ minimizing the objective function f indicates the way of the flow of the traffic minimizing the consumption of the network resources.

By referring to Figure 8A, there are the path $a_1$ and the path $a_2$ between the router R1 and the router R4. By referring to Figure 8B, there are the path $b_1$ and the path $b_2$ between the router R2 and the router R4. When Figure 8C is referred to, there is the path $c_1$ between the router R7 and the router R4.

In Figure 8A, the cost of the path $a_1$ is a total of the costs of the link between the router R1 and the router R2 (hereinafter referred to as "Link (R1-R2)" or the like) and the Link (R2-R3). Therefore, 1 + 1 + 1 = 3 indicates the cost. Furthermore, the cost of the path $a_2$ is a total of the costs of the Link (R1-R7), Link (R7-R6), Link (R6-R5), and Link (R5-R4). Therefore, 1 + 1 + 1 + 1 = 4 is the cost. Similarly, the costs of the path $b_1$ and path $b_2$ shown in Figure 8B, and the path $c_1$ shown in Figure 8C can be obtained. That is, the cost of the path $b_1$ is 2, the cost of the path $b_2$ is 5, and the cost of the path $C_1$ is 3.

Thus, the objective function obtained as a product of the consumption of the resources and the flow rate of the path of each path is calculated by the following expression.

$$f = 3a_1 + 4a_2 + 2b_1 + 5b_2 + 3c_1$$

The objective function is the value of the traffic amount of each path as a variable, and when the consumption of the network resources of a path is set as a constant (1 in this example), the consumption of the network resources can be minimized.

{Embodiments}

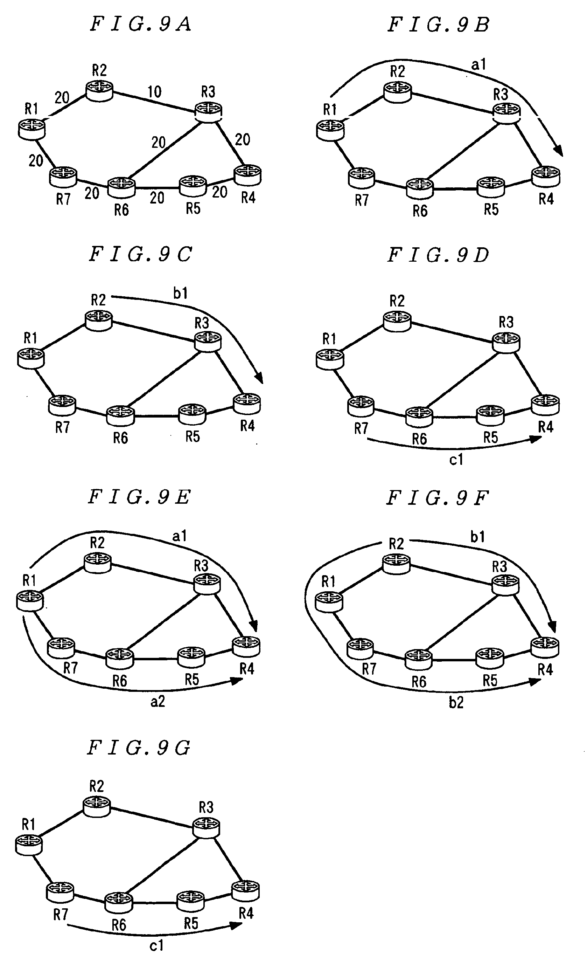

The first to third embodiments of the present invention are described below by referring to Figures 9A to 9G, 10A to 10G, 11A to 11G, and 12A to 12C.

(First Embodiment)

The topology of the network according to the present embodiment is shown in Figure 9A. In Figure 9A, the band of the link is 10 Mbps only between the router R2 and the router R3, and 20 Mbps between other routers. Assume that the network resources consumed by each link for unit traffic is 1.

The traffic between the router R1 and the router R4, between the router R2 and the router R4, and between the router R7 and the router R4 is 5 Mbps, respectively. As shown in Figures 9B, 9C, and 9D, the currently used paths are $a_1$, $b_1$, and $c_1$. The objective function is set such that the consumption of the network resources can be minimized, and the restrictive condition on the link, the restrictive condition on the traffic amount, and the auxiliary objective function are set, and it is determined whether or not the current link can support the traffic.

As shown in Figures 9B, 9C, and 9D, when the problem is solved by the simplex method relating to the objective function $f = 3a_1 + 2b_1 + 3c_1$, the feasible vector is obtained as follows.

$$(a_1, b_1, c_1) = (5, 5, 5)$$

In this state, since the traffic can be supported by the current path only, the traffic can be transferred.

Then, assume that the traffic has increased up to 10 Mbps respectively between the router R1 and the router R4, between the router R2 and the router R4, and between the router R7 and the router R4. The currently used paths are still the paths $a_1$, $b_1$, and $c_1$.

The objective function $f = 3a_1 + 2b_1 + 3c_1$ is set such that the consumption of the network resources can be minimized, and the restrictive condition on the link, the restrictive condition on the traffic amount, and the auxiliary objective function are set. Then, it is determined in the simplex method whether or not the current link can support the traffic.

In this state, the provisional feasible vector is represented as follows,

$$(a_1, b_1, c_1) = (10, 0, 10)$$

and stops without the auxiliary objective function set to 0. That is, it is indicated that the limit of 10 Mbps flows at the Link (R2-R3), and the provisional feasible vector indicates that the Link (R2-R3) is a bottleneck link.

The next pass is calculated by Dijkstra to avoid the Link (R2-R3) which is the above-mentioned bottleneck link. Thus, as shown in Figures 9E, 9F, and 9G, new bypaths $a_2$ and $b_2$ are added. With the paths added, the determination is performed again in the simplex method.

That is, the objective function

$$f = 3a_1 + 4a_2 + 2b_1 + 5b_2 + 3c_1$$

is solved in the simplex method. Thus, it is determined that the traffic can be supported, and the feasible vector is obtained.

$$(a_1, a_2, b_1, b_2, c_1) = (0, 10, 10, 0, 10)$$

(Second Embodiment)

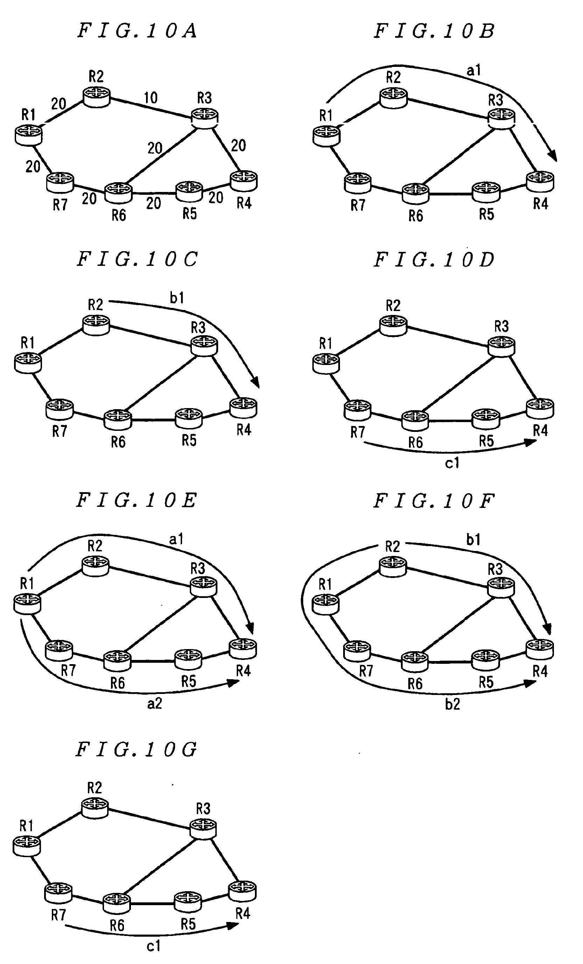

The topology of the network according to the present embodiment is shown in Figure 10A. In Figure 10A, the band of the link is 10 Mbps only between the router R2 and the router R3, and 20 Mbps between other routers. Assume that the network resources consumed by each link for unit traffic is 1.

In the present embodiment, there are two classes indicating the priorities. That is, there are classes A and B. The priorities of the classes are class A > class B.

The traffic between the router R1 and the router R4, between the router R2 and the router R4, and between the router R7 and the router R4 is 5 Mbps for the classes A and B respectively. As shown in Figures 10B, 10C, and 10D, the currently used paths are $a_1$, $b_1$, and $C_1$. The objective function is set such that the consumption of the network resources can be minimized, and the restrictive condition on the link, and the restrictive condition on the traffic amount are set.

If there is a quality request to transmit the traffic of class A through the shortest path, the conditions $a_1 \geq 5$, $b_1 \geq 5$, and $C_1 \geq 5$ are added as indicating the request above. The expression indicates that the traffic over the class A flows through the shortest path. From the restrictive condition, the auxiliary objective function is set, and it is determined whether or not the current link can support the traffic.

As shown in Figures 10B, 10C, and 10D, if the problem is solved in the simplex method relating to the objective function

$$f = 3a_1 + 2b_1 + 3c_1,$$

then the provisional feasible vector is represented as follows, and there is no solution.

$$(a_1, b_1, c_1) = (5, 5, 10)$$

In the state, the provisional feasible vector is

$$(a_1, b_1, c_1) = (5, 5, 10)$$

and stops without the auxiliary objective function set to 0. From the provisional feasible vector, it is indicated that the Link (R2-R3) is a bottleneck link.

To avoid the bottleneck link, the next path is calculated by Dijkstra to obtain a bypass. As a result, new paths $a_2$ and $b_2$ are obtained as shown in Figures 10E, 10F, and 10G. They are added as variables of the objective function.

Relating to the variable added objective function

$$f = 3a_1 + 4a_2 + 2b_1 + 5b_2 + 3c_1,$$

the expressions $a_1 \geq 5$, $b_1 \geq 5$, $c_1 \geq 5$ with the quality request taken into account are added, and it is determined again in the simplex method. It is determined that the traffic can be supported, and the feasible vector

$$(a_1, a_2, b_1, b_2, c_1) = (5, 5, 5, 5, 10)$$

is obtained as the optimal solution satisfying the quality request.

(Third Embodiment)

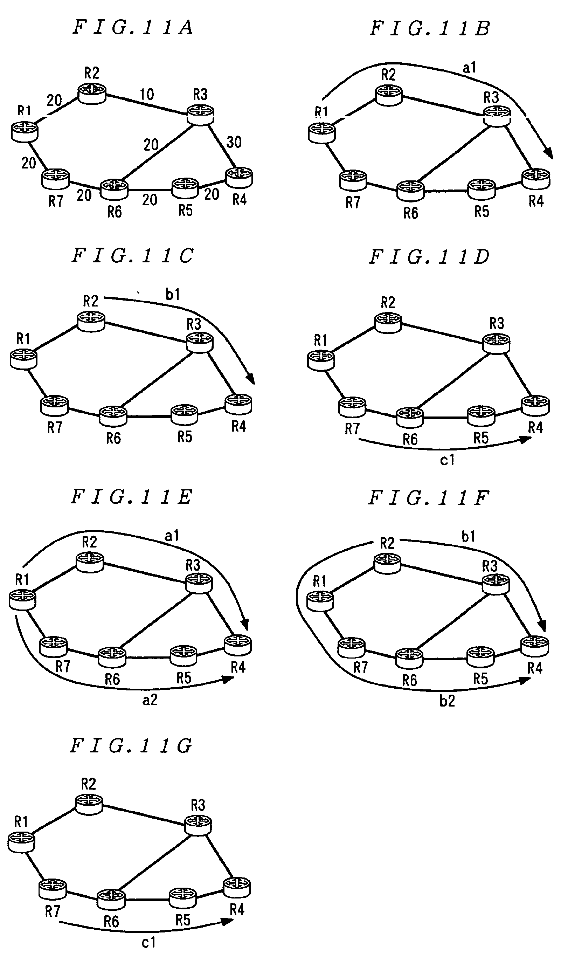

The topology of the network according to the present embodiment is shown in Figure 11A. In Figure 11A, the band of the link is 10 Mbps only between the router R2 and the router R3, and 20 Mbps between other routers. Assume that the network resources consumed by each link for unit traffic is 1.

In the present embodiment, there are three classes. That is, there are classes A, B, and C. The priorities of the classes are class A > class B > class C.

The traffic between the router R1 and the router R4, between the router R2 and the router R4, and between the router R7 and the router R4 is 5 Mbps for the classes A, B, and C respectively. As shown in Figures 11 B, 11C, and 11D, the currently used paths are $a_1$, $b_1$, and $C_1$. The objective function is set such that the consumption of the network resources can be minimized, and the restrictive condition on the link, and the restrictive condition on the traffic amount are set.

If there is a quality request to transmit the traffic of class A through the shortest path, the conditions $a_1 \geq 5$, $b_1 \geq 5$, and $c_1 \geq 5$ are added as indicating the request above. The expression indicates that the traffic over the class A flows through the shortest path. From the restrictive condition, the auxiliary objective function is set, and it is determined whether or not the current link can support the traffic.

As shown in Figures 11B, 11C, and 11D, if the problem is solved in the simplex method relating to the objective function

$$f = 3a_1 + 2b_1 + 3c_1,$$

then the provisional feasible vector is represented as follows, and there is no solution.

$$(a_1, b_1, c_1) = (5, 5, 10)$$

In the state, the provisional feasible vector is

$$(a_1, b_1, c_1) = (5, 5, 10)$$

and stops without the auxiliary objective function set to 0. From the provisional feasible vector, it is indicated that the Link (R2-R3) is a bottleneck link.

To avoid the bottleneck link, the next path is calculated by Dijkstra to obtain a bypass. As a result, new paths $a_2$ and $b_2$ are obtained as shown in Figures 11E, 11F, and 11G. They are added as variables of the objective function.

Relating to the variable added objective function

$$f = 3a_1 + 4a_2 + 2b_1 + 5b_2 + 3c_1,$$

the expressions $a_1 \geq 5$, $b_1 \geq 5$, $c_1 \geq 5$ with the quality request taken into account are added, and it is determined again in the simplex method. It is determined that the feasible vector

$$(a_1, a_2, b_1, b_2, c_1) = (5, 5, 5, 5, 10)$$

has no solution.

In the state, the provisional feasible vector is

$$(a_1, a_2, b_1, b_2, c_1) = (5, 5, 5, 5, 10)$$

and stops without the auxiliary objective function set to 0. From the provisional feasible vector, it is indicated that the Link (R6-R5) and Link (R5-R4) are bottleneck links.

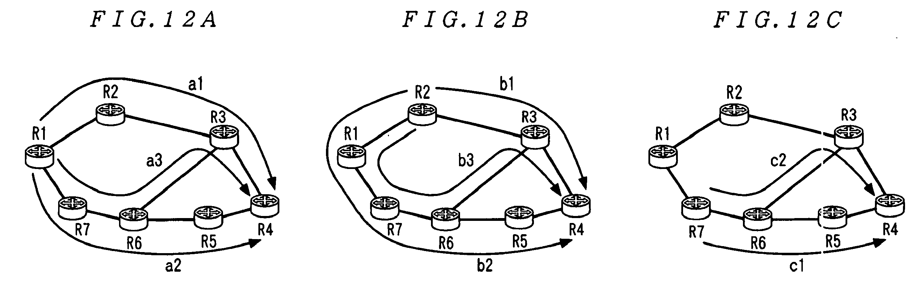

To avoid the bottleneck links, the next path is calculated by Dijkstra to obtain a bypass. As a result, new paths $a_3$, $b_3$, and $c_2$ are obtained as shown in Figures 12A, 12B, and 12C. They are added as variables of the objective function.

Relating to the variable added objective function

$$f = 3a_1 + 4a_2 + 4a_3 + 2b_1 + 5b_2 + 5b_3 + 3c_1 + 3c_2,$$

the expressions $a_1 \geq 5$, $b_1 \geq 5$, $c_1 \geq 5$ with the quality request taken into account are added, and it is determined again in the simplex method. It is determined that the traffic can be supported with a bypass added, and the feasible vector

$$(a_1, a_2, a_3, b_1, b_2, b_3, c_1, c_2) = (5, 5, 5, 5, 5, 5, 10, 5)$$

is obtained as the optimal solution satisfying the quality request.

There are three types of paths, that is, shortest path, the second path, and the third path, and higher priority traffic is assigned to a better path. That is, relating to the paths between the router R1 and the router R4, and between the router R2 and the router R4, the class A is assigned to the shortest path, the class B is assigned to the second shortest path, and the class C is assigned to the third shortest path, respectively.

Relating to the path between the router R7 and the router R4, the class A and the class B are assigned to the shortest path, and the class C is assigned to the second shortest path respectively.

Then, assume that the traffic has increased up to 10 Mbps respectively between the router R1 and the router R4, between the router R2 and the router R4, and between the router R7 and the router R4.

Relating to the objective function

$$f = 3a_1 + 4a_2 + 4a_3 + 2b_1 + 5b_2 + 5b_3 + 3c_1 + 3c_2,$$

it is determined again in the simplex method with the quality request taken into account. In this state, the feasible vector

$$(a_1, a_2, a_3, b_1, b_2, b_3, c_1, c_2) = (5, 5, 5, 5, 5, 5, 10, 5)$$

has no solution, and stops without the auxiliary objective function set to 0. From the provisional feasible vector, it is indicated that the Link (R3-R4) is a bottleneck link.

To avoid the bottleneck link, the next path is calculated by Dijkstra to obtain a bypass. However, no more new paths are found. That is, no more paths can be added to the network, and no true solution exists.

Since no path can be added, the traffic is made to flow with the feasible vector

$$(a_1, a_2, a_3, b_1, b_2, b_3, c_1, c_2) = (5, 5, 5, 5, 5, 5, 10, 5).$$

For example, if well-known DiffServ (Differentiated Services), etc. are combined, only the traffic having a lower priority can be discarded. In the present embodiment, only the class C having a iower priority can be discarded.

(Variation)

In the above-mentioned third embodiment, the algorithm of the correspondence of each class to a path flow rate by assigning a better path to a class having a higher priority is described, but the algorithm can be different by setting such that, for example, the traffic can flow without interference with each other having traffic of a higher priority, the traffic can flow through a pass satisfying the band request if the router requires a band, etc.

Furthermore, a large network is normally divided into areas, and a limited number of routers span each area. Therefore, if the present invention is applied to each area, the scalability can be satisfied.

When a bottleneck link is found, not only a link having the use rate of 100%, but also a link having the use rate of 70% or more, for example, can be defined as a bottleneck link, thereby successfully reducing the times of recursion with the number of variables added at a time, though.

In the explanation above, the consumption of the network resources of each link is used as a constant, but a value other than a constant can also be set. For example, a delay in queuing increases exponentially with an increase in use rate of a queue. Therefore, the consumption of network resources can be changed with the use rate of a link.

Furthermore, an objective function can be set not only to minimize the consumption of network resources, but also to minimize other network costs, for example, a delay, or can be set based on the number of hops.

When the delay is minimized, the coefficient of each path variable indicates a total delay of each link.

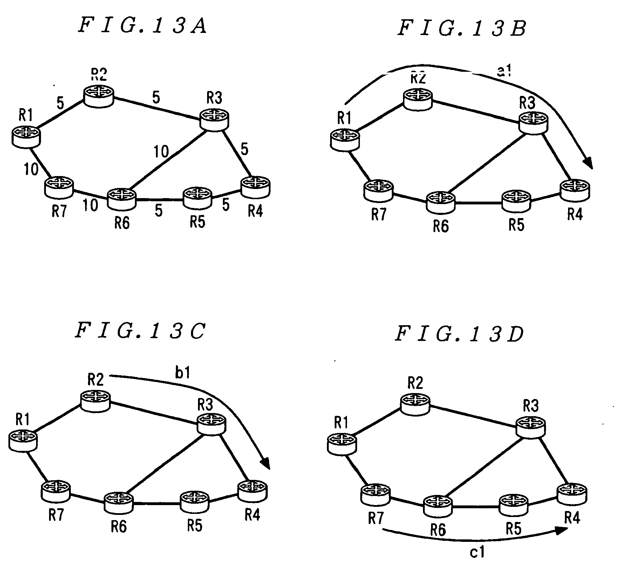

In the network shown in Figure 13A, assume that the delay of each link of the router R1 to the router R7, the router R7 to the router R6, and the router R6 to the router R3 is 10 Mbps, and the delay of the link between other routers is 5 Mbps.

Relating to the paths $a_1$, $b_1$, and $c_1$ shown in Figures 13B, 13C, and 13D, the objective function based on the delay is represented as follows.

$$\text{coefficient of } a_1 = 5 + 5 + 5 = 15$$

$$\text{coefficient of } b_1 = 5 + 5 = 10$$

$$\text{coefficient of } c_1 = 10 + 5 + 5 = 20$$

Therefore, the objective function is

$$r = 15a_1 + 10b_1 + 20c_1$$

To the objective function, as in the above-mentioned embodiment, a simplex is applied. In this case, the bottleneck link can be avoided by Dijkstra, etc.

On the other hand, relating to the path $a_1$, $b_1$, and $c_1$ shown in Figures 13B, 13C, and 13D, the objective function based on the number of hops is represented as follows. That is, since the number of hops between the adjacent routers is 1,

$$\text{coefficient of } a_1 = 1 + 1 + 1 = 3$$

$$\text{coefficient of } b_1 = 1 + 1 = 2$$

$$\text{coefficient of } c_1 = 1 + 1 + 1 = 3$$

Therefore, the objective function is

$$f = 3a_1 + 2b_1 + 3c_1$$

.

To the objective function, as in the above-mentioned embodiment, a simplex is applied. In this case, the bottleneck link can be avoided by the above-mentioned Dijkstra, etc.

As explained above, the invention can determine whether or not the current path can accommodate the traffic by finding a bottleneck link, adding a bypass, and further applying a simplex method when there is no optimal solution in a simplex method. If the traffic cannot be accommodated, only a necessary path can be added, and the optimal traffic distribution can be performed by setting the objective function based on the network cost such as the consumption of network resources, a delay, the number of hops, etc.

**Claims**

1. A traffic distribution control apparatus which controls traffic in a network to be distributed to the network by determining whether or not an existing path realized by a router (R1, ..., R7) configuring the network can support requested traffic, comprising:

   determination means (12) adapted to determine whether or not the existing path can support the traffic by applying a simplex method to a problem of a linear programming formed by an objective function including traffic among routers configuring a network and information about a path in the network

   **characterized by**
   the determination means (12) being further adapted to specify a bottleneck link, when an auxiliary objective function does not satisfy a predetermined value, and further adapted to determine whether or not the existing path can support the traffic by applying a simplex method formed by the objective function, the auxiliary objective function and a restrictive condition; and
   bypass search means (13) for searching for a bypass other than the existing path when said determination means (12) determines that the existing path cannot support the traffic, wherein
   said determination means (12) further makes a determination by adding a bypass searched for by said bypass search means (13).

2. The traffic distribution control apparatus according to claim 1, wherein
   said determination means finds a bottleneck link causing a factor disabling the support of the requested traffic by applying the simplex method to an auxiliary objective function determined by the restrictive condition; and
   said bypass search means searches for the bypass for bypassing the bottleneck link.

3. The traffic distribution control apparatus according to claim 1 or 2, wherein said bypass search means searches for the bypass using an algorithm of searching for a shortest path based on a link cost among the routers.

4. The traffic distribution control apparatus according to any of the claims 1 to 3, further comprising traffic determination means for determining traffic for minimizing the cost of the network based on a determination result of said determination means.

5. A traffic distribution control method for controlling traffic in a network to be distributed to the network by determining whether or not an existing path realized by a router (R1, ..., R7) configuring the network can support requested traffic, comprising:

a determining step (S202) of determining whether or not the existing path can support the traffic by applying a simplex method to a problem of a linear programming formed by an objective function including traffic among routers configuring a network and information about a path in the network;

**characterized in that**
in the determining step (S202) a bottleneck link is specified (S208), when an auxiliary objective function does not satisfy a predetermined value (S207), and applying a simplex method to a problem of a linear programming formed by the objective function, the auxiliary function and a restrictive function (S206);
a bypass searching step (5209) of searching for a bypass other than the existing path when said determining step (S202) determines that the existing path cannot support the traffic, wherein
a further determination is made in said determining step (S202) by adding a bypass (S211) searched for in said bypass searching step (S202).

6. The traffic distribution control method according to claim 5, further comprising a traffic determining step of determining traffic for minimizing consumption of resources of the network based on a determination result of said determining step.

**Patentansprüche**

1. Verkehrsverteilungs-Steuervorrichtung, die Verkehr in einem Netz steuert, der auf das Netz verteilt werden soll, indem sie bestimmt, ob ein vorhandener Pfad, der durch einen das Netz konfigurierenden Router (R1, ..., R7) verwirklicht wird, den angeforderten Verkehr unterstützen kann, mit:

Bestimmungsmitteln (12), die ausgelegt sind, um zu bestimmen, ob der vorhandene Pfad den Verkehr unterstützen kann, indem ein Simplex-Verfahren auf ein Problem einer linearen Programmierung, die durch eine Zielfunktion gebildet wird, die Verkehr zwischen Routern, die ein Netz konfigurieren, und Information über einen Pfad in dem Netz enthält, angewendet wird,

**dadurch gekennzeichnet, dass**
die Bestimmungsmittel (12) ferner ausgelegt sind, um eine Flaschenhalsverbindung zu bestimmen, wenn eine Hilfszielfunktion einen vorgegebenen Wert nicht erfüllt, und ferner ausgelegt sind, um zu bestimmen, ob der vorhandene Pfad den Verkehr unterstützen kann, indem ein Simplex-Verfahren, das durch die Zielfunktion, die Hilfszielfunktion und eine beschränkende Bedingung gebildet wird, angewendet wird;
Umgehungssuchmittel (13) zum Suchen einer Umgehung, die von dem vorhandenen Pfad verschieden ist, wenn die Bestimmungsmittel (12) bestimmen, dass der vorhandene Pfad den Verkehr nicht unterstützen kann, vorgesehen sind; und
die Bestimmungsmittel (12) ferner eine Bestimmung durch Hinzufügen einer durch die Umgehungssuchmittel (13) gesuchten Umgehung ausführen.

2. Verkehrsverteilungs-Steuervorrichtung nach Anspruch 1, wobei
die Bestimmungsmittel eine Flaschenhalsverbindung finden, die einen Faktor darstellt, der die Unterstützung des angeforderten Verkehrs verhindert, indem das Simplex-Verfahren auf eine durch die beschränkende Bedingung bestimmte Hilfszielfunktion angewendet wird; und
die Umgehungssuchmittel die Umgehung zum Umgehen der Flaschenhalsverbindung suchen.

3. Verkehrsverteilungs-Steuervorrichtung nach Anspruch 1 oder 2, wobei die Umgehungssuchmittel die Umgehung unter Verwendung eines Algorithmus zum Suchen eines kürzesten Pfades anhand von Verbindungskosten zwischen den Routern suchen.

4. Verkehrsverteilungs-Steuervorrichtung nach einem der Ansprüche 1 bis 3, die ferner Verkehrsbestimmungsmittel zum Bestimmen von Verkehr umfasst, um die Kosten des Netzes anhand eines Bestimmungsergebnisses der Bestimmungsmittel zu minimieren.

**5.** Verkehrsverteilungs-Steuerverfahren zum Steuern von Verkehr in einem Netz, der auf das Netz verteilt werden soll, durch Bestimmen, ob ein vorhandener Pfad, der durch einen Router (R1, ..., R7), der das Netz konfiguriert, verwirklicht ist, angeforderten Verkehr unterstützen kann, mit:

einem Bestimmungsschritt (S202) zum Bestimmen, ob der vorhandene Pfad den Verkehr unterstützen kann, durch Anwenden eines Simplex-Verfahrens auf ein Problem einer linearen Programmierung, die durch eine Zielfunktion gebildet ist, die Verkehr zwischen Routern, die ein Netz konfigurieren, und Information über einen Pfad in dem Netz enthält;

**dadurch gekennzeichnet, dass**
in dem Bestimmungsschritt (S202) eine Flaschenhalsverbindung bestimmt wird (S208), wenn eine Hilfszielfunktion einen vorgegebenen Wert (S207) nicht erfüllt, und ein Simplex-Verfahren auf ein Problem einer linearen Programmierung angewendet wird, die durch die Zielfunktion, die Hilfsfunktion und eine beschränkende Funktion (S206) gebildet ist;
ein Umgehungssuchschritt (S209) vorgesehen ist, bei dem eine Umgehung, die von dem vorhandenen Pfad verschieden ist, gesucht wird, wenn der Bestimmungsschritt (S202) bestimmt, dass der vorhandene Pfad den Verkehr nicht unterstützen kann, wobei
eine weitere Bestimmung in dem Bestimmungsschritt (S202) ausgeführt wird, indem eine in dem Umgehungssuchschritt (S202) gesuchte Umgehung hinzugefügt wird (S211).

**6.** Verkehrsverteilungs-Steuerverfahren nach Anspruch 5, das ferner einen Verkehrsbestimmungsschritt zum Bestimmen von Verkehr anhand eines Bestimmungsergebnisses des Bestimmungsschrittes umfasst, um den Verbrauch von Betriebsmitteln des Netzes zu minimieren.

**Revendications**

**1.** Dispositif de commande de distribution du trafic commandant le trafic dans un réseau pour le distribuer dans le réseau en déterminant si oui ou non une voie établie par un routeur (R1, ..., R7) configurant le réseau peut supporter le trafic exigé, comprenant:

des moyens de détermination (12) adaptés pour déterminer si oui ou non la voie existante peut supporter le trafic par application d'une méthode du simplex à un problème de programmation linéaire sous la forme d'une fonction objective contenant le trafic entre des routeurs configurant un réseau et des informations concernant une voie dans le réseau

**caractérisé en ce que**
les moyens de détermination (12) sont adaptés, de plus, pour identifier un chainon de voie qui constitue un goulot d'étranglement, lorsqu'une fonction objective auxiliaire ne satisfait pas une valeur prédéterminée, et sont adaptés de plus pour déterminer si oui ou non la voie existante peut supporter le trafic par application d'une méthode du simplex utilisant la fonction objective, la fonction objective auxiliaire et une contrainte; et
des moyens de recherche d'une voie de contournement (13) pour rechercher une voie de contournement autre que la voie existante lorsque lesdits moyens de détermination (12) déterminent que la voie existante ne peux pas supporter le trafic, dans lequel
lesdits moyens de détermination (12) effectuent de plus une détermination en ajoutant une voie de contournement recherchée par lesdits moyens de recherche d'une voie de contournement (13).

**2.** Dispositif de commande de distribution du trafic selon la revendication 1, dans lequel
lesdits moyens de détermination trouvent un chainon de voie qui constitue un goulot d'étranglement produisant un facteur empêchant de supporter le trafic exigé par application de la méthode du simplex à une fonction objective auxiliaire déterminée par la contrainte; et
lesdits moyens de recherche d'une voie de contournement recherchent la voie de contournement pour contourner le chainon de voie qui constitue un goulot d'étranglement.

**3.** Dispositif de commande de distribution du trafic selon la revendication 1 ou 2, dans lequel lesdits moyens de recherche d'une voie de contournement recherchent la voie de contournement en utilisant un algorithme de recherche du chemin le plus court sur la base d'un coût de liaison parmi les routeurs.

**4.** Dispositif de commande de distribution du trafic selon l'une quelconque des revendications 1 à 3, comprenant de plus des moyens de détermination du trafic pour déterminer le trafic de manière à minimiser le coût du réseau en se basant sur un résultat d'une détermination par les moyens de détermination.

**5.** Procédé de commande de distribution du trafic pour commander le trafic dans un réseau pour le distribuer dans le réseau en déterminant si oui ou non une voie existante établie par un routeur (R1, ..., R7) configurant le réseau peut supporter un trafic exigé, comprenant:

une étape de détermination (S202) consistant à déterminer si oui on non la voie existante peut supporter le trafic par application d'une méthode du simplex à un problème de programmation linéaire sous la forme d'une fonction objective contenant le trafic entre des routeurs configurant un réseau et des informations concernant une voie dans le réseau;

**caractérisé en ce que**
durant l'étape de détermination (S202) un chainon de voie constituant un goulot d'étranglement est identifié (S208), lorsqu'une fonction objective auxiliaire ne satisfait pas une valeur prédéterminée (S207), et par application d'une méthode du simplex à un problème de programmation linéaire sous la forme de la fonction objective, de la fonction objective auxiliaire et d'une contrainte (S206);
une étape de recherche d'une voie de contournement (S209) consistant à rechercher une voie de contournement autre que la voie existante lorsque ladite étape de détermination (S202) détermine que la voie existante ne peut pas supporter le trafic, dans lequel
une détermination supplémentaire est effectuée durant ladite étape de détermination (S202) en ajoutant une voie de contournement (S211) recherchée durant l'étape de recherche d'une voie de contournement (S202).

**6.** Procédé de commande de distribution du trafic selon la revendication 5, comprenant de plus une étape de détermination du trafic consistant à déterminer le trafic de manière à minimiser la consommation des ressources du réseau en se basant sur un résultat d'une détermination de ladite étape de détermination.

*FIG. 1*

*FIG. 2*

## *FIG. 3*

Start

( MONITOR NETWORK TRAFFIC )  ~ S200

TRIGGER PERIODICAL TRAFFIC?  S201  — No

Yes

SET OBJECTIVE FUNCTION  ~ S203

START DETERMINING IN SIMPLEX METHOD  ~ S202

SET OBJECTIVE FUNCTION  ~ S203

SET RESTRICTIVE CONDITION  ~ S204

SET AUXILIARY OBJECTIVE FUNCTION  ~ S205

SOLVE IN SIMPLEX METHOD RELATING TO AUXILIARY OBJECTIVE FUNCTION AND RESTRICTIVE CONDITION  ~ S206

IS AUXILIARY OBJECTIVE FUNCTION VALUE PREDETERMINED VALUE?  S207  — Yes  (A)

No

DEFINE BOTTLENECK LINK FROM OBTAINED VECTOR  ~ S208

OBTAIN BYPASS OF BOTTLENECK LINK  ~ S209

BYPASS EXISTING?  S210  — No  (B)

Yes

ADD TO PATH GROUP VARIABLE  ~ S211

20

# F I G. 4

(A) → | SOLVE IN SIMPLEX METHOD RELATING TO OBJECTIVE FUNCTION AND RESTRICTIVE CONDITION USING OBTAINED VECTOR AS INITIAL FEASIBLE VECTOR | ~ S301

| OBTAIN OPTIMAL DISTRIBUTION OF TRAFFIC FROM OPTIMAL FEASIBLE VECTOR | ~ S302

E n d (NOTIFICATION TO NETWORK ROUTER) ~ S303

(B) → | IMPOSSIBLE TO SUPPORT TRAFFIC IN ENTIRE NETWORK BAND | ~ S304

| OBTAIN OPTIMAL TRAFFIC DISTRIBUTION IN THIS STATE FROM VECTOR OBTAINED IN THIS STATE | ~ S305

*FIG. 5A*

*FIG. 5B*

*FIG. 6A*

*FIG. 6B*

*FIG.7A*

*FIG.7B*

*FIG.7C*

*FIG.7D*

*FIG.7E*

*FIG.7F*

EP 1 473 894 B1

*FIG.8A*

*FIG.8B*

*FIG.8C*

FIG.9A

FIG.9B

FIG.9C

FIG.9D

FIG.9E

FIG.9F

FIG.9G

FIG. 10A

FIG. 10B

FIG. 10C

FIG. 10D

FIG. 10E

FIG. 10F

FIG. 10G

FIG.11A

FIG.11B

FIG.11C

FIG.11D

FIG.11E

FIG.11F

FIG.11G

FIG.12A

FIG.12B

FIG.12C

FIG.13A

FIG.13B

FIG.13C

FIG.13D

F I G. 1 4 A

F I G. 1 4 B

F I G. 1 4 C

F I G. 1 4 D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002131424 A

- US 2002172149 A

**Non-patent literature cited in the description**

- **MASAO IRI ; TAKASHI FURUBAYASHI.** Network Theory. *OR Library 12,* 1976